Europäisches Patentamt

European Patent Office

Office européen des brevets

(19)

(11) Veröffentlichungsnummer: **0 175 292**
**B1**

(12)

# EUROPÄISCHE PATENTSCHRIFT

(45) Veröffentlichungstag der Patentschrift :
25.03.87

(51) Int. Cl.⁴ : **B 65 G 47/30**

(21) Anmeldenummer : 85111560.0

(22) Anmeldetag : 12.09.85

(54) **Anordnung zum Umformen eines angeförderten mehrspurigen Flaschenstroms zu einem abzufördernden einspurigen Flaschenstrom.**

(30) Priorität : 13.12.84 DE 3445543
15.09.84 DE 3433920

(43) Veröffentlichungstag der Anmeldung :
26.03.86 Patentblatt 86/13

(45) Bekanntmachung des Hinweises auf die Patenterteilung : 25.03.87 Patentblatt 87/13

(84) Benannte Vertragsstaaten :
CH DE FR GB IT LI NL

(56) Entgegenhaltungen :
DE-A- 3 202 991
US-A- 3 610 396

(73) Patentinhaber : **Seitz Enzinger Noll Maschinenbau Aktiengesellschaft**
**Neckarauer Strasse 140-162 Postfach 645**
**D-6800 Mannheim 1 (DE)**

(72) Erfinder : **Born, Gerhard**
**Don-Bosco-Strasse 16**
**D-6530 Bingen (Rhein) (DE)**
Erfinder : **Kaiser, Klaus**
**Rheinhessenstrasse 12**
**D-6551 Neu-Bamberg (DE)**

EP 0 175 292 B1

**Beschreibung**

Die Erfindung betrifft eine Vorrichtung zum Umformen eines angeförderten mehrspurigen Flaschenstroms zu einem abzufördernden einspurigen Flaschenstrom gemäß dem Oberbegriff des Anspruchs 1.

Eine solche Anordnung ist durch die DE-OS 32 02 991 bekannt geworden. Dort wird der auf dem mehrbahnigen Zuförderer angeförderte breite Flaschenstrom unter Einfluß des aus mehreren, mit abgestufter Geschwindigkeit umlaufenden parallelen Transportbändern bestehenden und als Beschleunigungsstrecke dienenden Zwischenförderers zu einem abzufördernden einspurigen Flaschenstrom umgeformt, der seinerseits von dem Zwischenförderer auf den einspurigen Abförderer gelangt und durch diesen einer Flaschenbehandlungsmaschine, beispielsweise Füllmaschine, Etikettiermaschine, zugeführt wird.

Für die Umformung sind die Obertrume der parallelen Transportbänder von Zuförderer, Zwischenförderer und Abförderer gegeneinander in Förderrichtung versetzt und nach Art einer quer zur Transportrichtung der Transportbänder verlaufenden schiefen Ebene ausgebildet, wobei an der oberen Längsseite des Zwischenförderers stromauf zur Transportrichtung seiner Transportbänder der Flascheneinlauf vom mehrbahnigen Zuförderer und an der gegenüberliegenden unteren Längsseite des Zwischenförderers stromab zur Förderrichtung diagonal versetzt, der Flaschenauslauf zum einspurigen Abförderer angeordnet sind. Zumindest im Bereich des Flascheneinlaufs und des Flaschenauslaufs weisen die Transportflächen des Zu- und Abförderers gleiche Neigung wie die die schiefe Ebene bildenden Bandobertrume des Zwischenförderers auf, wobei der Neigungswinkel der sich quer zur Transportrichtung erstreckenden Ebene so gewählt ist, daß die vom Zuförderer angeförderten Flaschen des breiten Flaschenstroms unter dem Einfluß der Schwerkraft vom Zuförderer über den Zwischenförderer zum Abförderer hinabgleiten, ohne dabei umzukippen. Bei dieser Abwärtsbewegung stützen sich die Flaschen zunächst gegenseitig, dann bei fortschreitender Beschleunigung durch die Transportbänder einzeln an einer Führungsschiene ab, die mit ihrer Führungsfläche im rechten Winkel zur schiefen Ebene angeordnet und schräg über den Zwischenförderer geführt ist. Hierzu ist jedoch ein dem Zuförderer zugewandtes seitliches Führungsgeländer notwendig, das das Führungsgeländer des Zuförderers verbindet und im Übergangsbereich zum jeweiligen seitlichen Führungsgeländer jeweils einen im Richtungsverlauf unterschiedlichen Bogen aufweist.

Bei dieser bekannten Vorrichtung benötigt die Führungsschiene zum Stützen des Flaschenstroms sowohl im Bereich des Übergangs der Flaschen vom Zuförderer zum Zwischenförderer als auch im Bereich des Übergangs der Flaschen vom Zwischenförderer zum einspurigen Abförderer jeweils einen Bogen, der einen den Flaschenstrom störenden Widerstand bildet. Ein solcher sogenannter Etagenbogen zwingt dem abzustützenden Flaschenstrom zwei Richtungsänderungen auf, denen bei hohen Förderleistungen nur standfeste Flaschen folgen können. Außerdem bewirkt jede Richtungsänderung Unruhe im Flaschenstrom und löst darin Umverteilungen aus, die zu erhöhter Lärmentwicklung führen. Abgesehen davon, daß eine aus den beiden Bögen gebildete Führungsschiene aufwendig in der Fertigung ist, wird durch diese Zwangsführung zur Umformung des breiten Flaschenstroms zum einspurigen Flaschenstrom eine relativ lange Strecke für den Zuförderer und den Zwischenförderer benötigt, um die gesicherte Abwärtsführung des Flaschenstroms über die schiefe Ebene zu ermöglichen. Der dadurch erforderliche Bauaufwand und Platzbedarf sind weitere Nachteile der bekannten Vorrichtung. Schließlich erfordert die dort vorgeschriebene gestufte Geschwindigkeit der Transportbänder des Zwischenförderers einen erhöhten Antriebs- und Steuerungsaufwand.

Aufgabe der Erfindung ist es, eine Vorrichtung der vorausgesetzten Art anzugeben, welche die drucklose Umformung eines mittels Bandförderer angeförderten breiten mehrspurigen Flaschenstroms zu einem abzufördernden einspurigen Flaschenstrom unter Wegfall der vom Zuförderer über den Zwischenförderer zum Abförderer verlaufenden, eine Zwangsführung bildenden Führungsschiene und Verringerung des Bauaufwandes auf kürzerer Strecke als bisher und bei geringem Platzbedarf und Steuerungsaufwand ermöglicht.

Diese Aufgabe wird bei der vorausgesetzten Vorrichtung durch die kennzeichnenden Merkmale des Anspruchs 1 gelöst.

Durch diese Lösung, die im wesentlichen die direkte Zuführung des angeförderten breiten Flaschenstroms zum Zwischenförderer und Abförderer in deren Transportrichtung vorsieht, entfällt die bei der bekannten Vorrichtung zur Umformung des angeförderten breiten Flaschenstroms erforderliche zwangsweise Abwärtsbewegung an der gebogenen Führungsschiene und gleichzeitig eine solche Art von Führungsschiene. Zur Verringerung des Bauaufwands und des Platzbedarfs entfallen dadurch auch die an den Zwischenförderer angrenzende Transportstrecke des Zuförderers, die bisher als Umformstrecke benötigt wurde, und die ungenutzte Transportfläche des Zwischenförderers auf der Rückseite der Führungsschiene.

Vorteilhafte Weiterbildungen der Erfindung sind den Unteransprüchen zu entnehmen.

Zwei Ausführungsbeispiele sind in der Zeichnung dargestellt und im folgenden näher beschrieben.

Es zeigen :

Figur 1 eine Draufsicht auf eine erfindungsgemäße Anordnung zum Umformen von Flaschenreihen,

Figur 2 einen Querschnitt der Anordnung in Schnittrichtung I-I der Fig. 1,

Figur 3 einen niveau- oder höhengleichen Übergang mit Gleitblechen, deren Überschubkante zungenförmig ausgebildet ist,

Figur 4 einen niveau- oder höhengleichen Übergang mit Gleitblechen, deren Überschubkante als Schräge ausgebildet ist,

Figur 5 die Anordnung nach Fig. 1 mit einem dem höhengleichen Übergang nach Fig. 4 nachgeordneten Gegengeländer,

Figur 6 die Anordnung nach Fig. 1 mit einem dem höhengleichen Übergang nach Fig. 3 nachgeordneten Gegengeländer,

Figur 7 einen Querschnitt des Gegengeländers nach Fig. 6 in Schnittrichtung II-II der Fig. 6,

Figur 8 eine Flaschenstromausbildung bei einem höhengleichen Übergang nach Fig. 3.

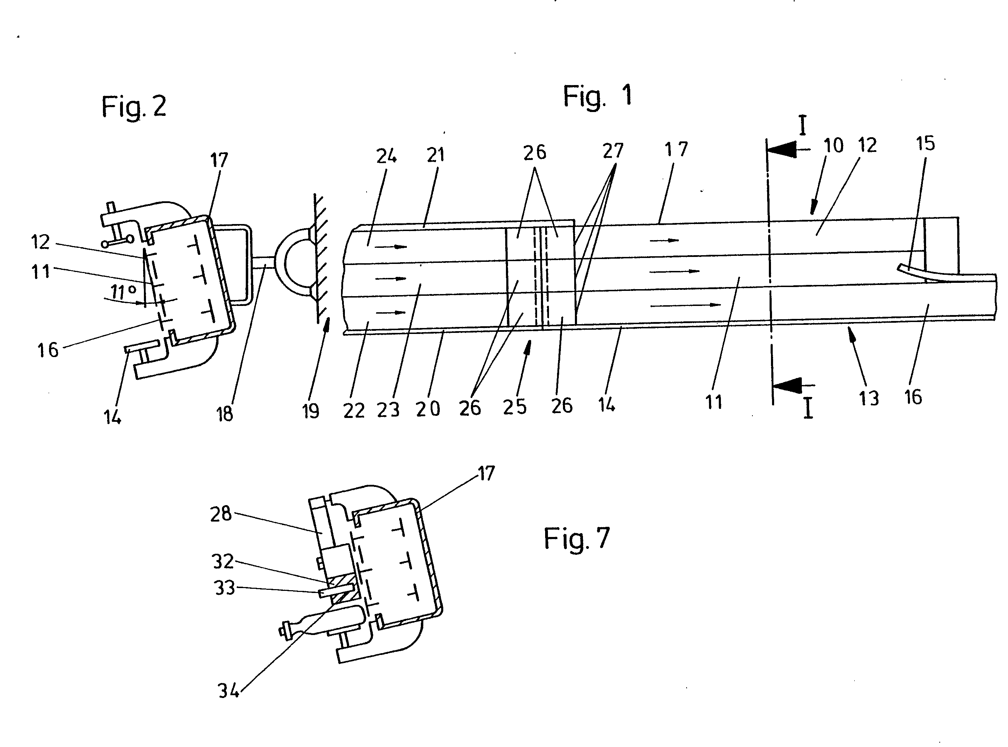

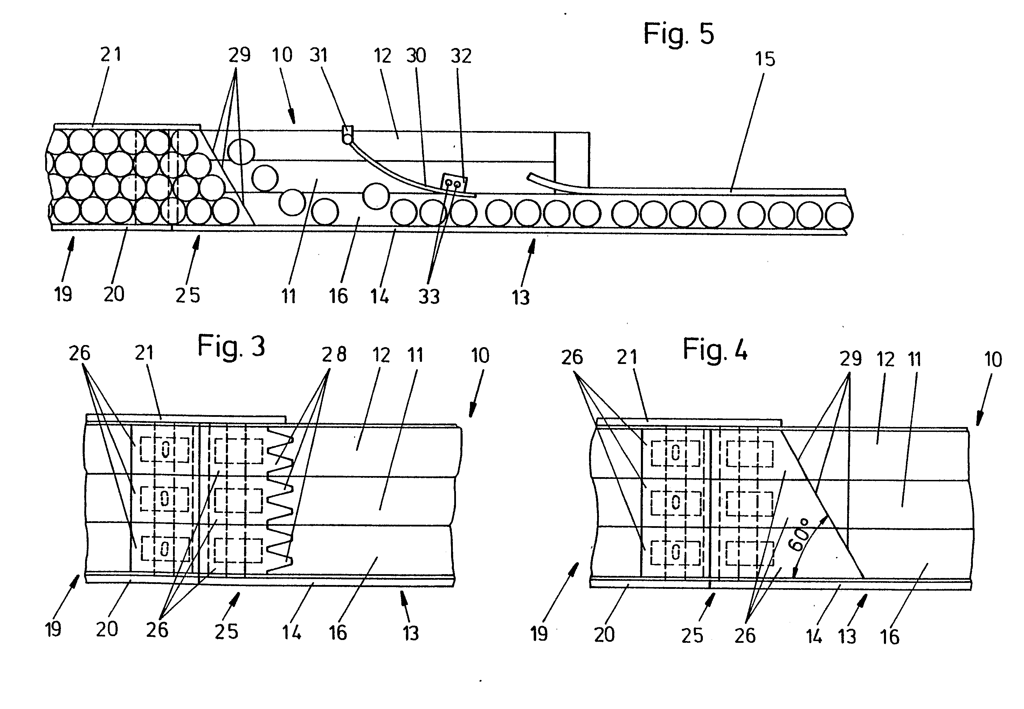

Die Fig. 1 zeigt für das Ausführungsbeispiel einen Teil eines noch zu beschreibenden Umformbereiches für in den Figuren 5 bis 8 angedeutete Flaschen bildenden Zwischenförderer 10, der zwei parallel nebeneinander angeordnete Transportbänder 11, 12 aufweist, die endlos umlaufen. Sie bestehen jeweils aus einer Scharnierbandkette und werden mittels einer nicht dargestellter Antriebseinrichtung angetrieben. Die Obertrume der Transportbänder 11, 12, die vorzugsweise spaltfrei aneinanderliegen, bilden zusammen eine Transportfläche in der Art einer schiefen Ebene, die quer zur Transportrichtung der Transportbänder 11, 12 zweckmäßigerweise um 11° geneigt ist (Fig. 2).

Dem Zwischenförderer 10 ist ein einspuriger Abförderer 13 zugeordnet, der seitliche Führungsgeländer 14, 15 und ein Transportband 16 aufweist, das in Transportrichtung des Zwischenförderers 10 umläuft. Der Abförderer 13, der zu einer nicht dargestellten Flaschenbehandlungsmaschine, beispielsweise Füllmaschine, Etikettiermaschine, führt, ist mit der Transportfläche seines Transportbandes 16, die zumindest im Bereich des Zwischenförderers 10 an die Neigung der schiefen Ebene angepaßt ist und mit den Obertrumen des Zwischenförderers 10 eine gemeinsame Transportfläche bildet, parallel zum oberen Bandobertrum des unteren Transportbandes 11 dem Zwischenförderer 10 zugeordnet und endet mit seiner Umlenkung vom Untertrum zum Obertrum im Bereich der Umlenkung des Zwischenförderers 10 vom Untertrum zum Obertrum. Zweckmäßigerweise ist der Bereich des Transportbandes 16, der die an die schiefe Ebene des Zwischenförderers 10 angepaßte Transportfläche aufweist, zusammen mit den Transportbändern, 11, 12 des Zwischenförderers 10 in einem Gestell 17 gelagert, das auch die Umlenkungen des Zwischenförderers 10 und des Abförderers 13 vom Untertrum zum Obertrum aufnimmt und mittels Stützen 18 auf dem Planum aufgestützt ist.

Anstelle der Transportbänder 11 und 12 kann der Zwischenförderer auch mit einem einzigen Transportband ausgestattet sein, dessen Breite der um die Breite des Transportbandes des Abförderers verringerten Breite des Zuförderers entspricht.

Die Transportbänder 11 und 12 des Zwischenförderers 10 können mit gleicher Geschwindigkeit oder aber auch mit abgestufter Geschwindigkeit angetrieben werden. Ebenso kann das Transportband 16 des Abförderers 13 mit unterschiedlicher, insbesondere höherer Geschwindigkeit umlaufen als das oder die Transportbänder des Zwischenförderers. Es ist aber auch möglich, das Transportband 16 mit gleicher Geschwindigkeit wie die des Zwischenförderers umlaufen zu lassen.

Der Abförderer 13 kann ferner auch aus zwei nicht dargestellten, mit abgestufter Geschwindigkeit umlaufenden Förderern bestehen, wobei der eine Förderer ein Transportband aufweist, das die an die schiefe Ebene des Zwischenförderers 10 angepaßte Transportfläche des Abförderers 13 besitzt und der andere Förderer, der stromabwärts des Zwischenförderers 10 parallel an den einen Förderer anzuschließen ist, ein weiterführendes, an die nicht dargestellte Flaschenbehandlungsmaschine angeschlossenes Transportband mit höherer Geschwindigkeit aufweist.

Von den beiden Führungsgeländern 14, 15 des Abförderers 13 erstreckt sich das dem Zwischenförderer 10 benachbarte Führungsgeländer 15 in den Endbereich des Zwischenförderers 10. Das dem Zwischenförderer 10 abgewandte Führungsgeländer 14 verläuft entlang der tiefliegenden Längsseite des Gestells 17 und endet am Gestellende im Bereich der Umlenkung des Abförderers 13 vom Untertrum zum Obertrum.

In Transportrichtung des Zwischenförderers 10 ist ein Zuförderer 19 mit seinen Umlenkungen vom Obertrum zum Untertrum den Umlenkungen des Zwischenförderers 10 und des Abförderers 13 vom Untertrum zum Obertrum vorgeordnet. Er ist ebenfalls mit seitlichen Führungsgeländern 20, 21 versehen und weist mehrere parallele, in Transportrichtung zur gemeinsamen Transportfläche aus den Obertrumen des Zwischenförderers 11 und des Abförderers 13 mit gleicher Geschwindigkeit umlaufende und zweckmäßigerweise aus Scharnierbandketten bestehende Transportbänder auf, deren Obertrume eine ebene Transportfläche bilden, die an die Neigung der gemeinsamen Transportfläche angepaßt ist. Beim Ausführungsbeispiel sind drei derartige Transportbänder 22, 23, 24 für den Zuförderer 19 vorgesehen, der vorzugsweise als Dosierstrecke ausgebildet und gleichfalls mittels Stützen 18 auf dem Planum abgestützt ist. Dabei stehen die tiefliegende Längsseite des Zuförderers 19 und des Abförderers 13 in Flucht zueinander, wobei das an der tiefliegenden Längsseite des Abförderers 13 verlaufende Führungsgeländer 14 an das an der tiefliegenden Längsseite des Zuförderers 19 verlaufende Führungsgeländer 20 angeschlossen ist. Hierbei ist darauf geachtet, daß die Führungsgeländer 14, 20 so hoch angeordnet sind, daß auf der gemeinsamen Transportfläche befindliche umgefallene Flaschen sich unter den Führungsgeländern 14, 20 hindurch bewegen und ausgeschieden werden können. Des weiteren ist das hochliegende Führungsgeländer 21 in bekannter Weise einstellbar ausgebildet.

Im Übergangsbereich der Obertrume des Zuförderers 19 zur gemeinsamen Transportfläche ist ein im wesentlichen niveaugleicher Übergang 25 vorgesehen. Er ist im einfachen Fall einstückig ausgebildet oder besteht, wie Fig. 1 zeigt, aus mehreren rechteckigen Gleitblechen 26, die jeweils oberhalb einer Umlenkung des Zuförderers 19 zum Untertrum sowie oberhalb einer Umlenkung des Zwischenförderers 10 zum Obertrum und oberhalb der Umlenkung des Abförderers 13 zum Obertrum angeordnet sind. Bei den oberhalb einer Umlenkung des Zwischenförderers 10 und der Umlenkung des Abförderers 13 angeordneten Gleitblechen 26 kann die gerade Blechkante an der Überschubseite zur sicheren Übergabe der Flaschen auf den Zwischenförderer 10 und Abförderer 13 nach Art einer Doppelzunge 28 ausgebildet sein (Fig. 3). Diesem Zweck können auch die in Fig. 4 gezeigten Gleitbleche 26 dienen, die an der Überschubseite mit einer Schräge 29 versehen sind. Hierbei bilden die Schrägen 29 aller Gleitbleche 26 gemeinsam eine Gerade. Sie verläuft quer zur Bewegungsrichtung der Transportbänder 11, 12, 16 von Zwischenförderer 10 und Abförderer 13, wobei zwischen der die jeweilige Überschubkante bildenden Schräge 29 und der tiefliegenden oder hochliegenden Längsseite des jeweiligen Gleitbleches 26 ein Winkel von 60° bis 65° besteht. Vorzugsweise ist aber ein Winkel von 65° gewählt.

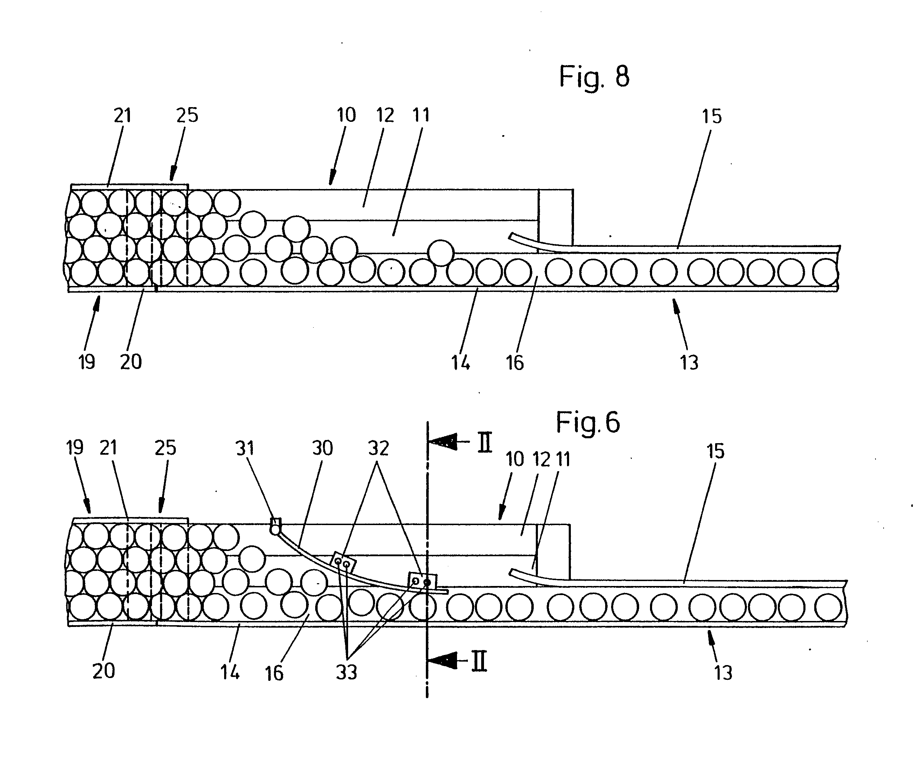

In weiterer Ausgestaltung der Erfindung ist, wie Fig. 5 aufweist, stromabwärts des im wesentlichen niveaugleichen Übergangs 25 ein auf den Flaschenstrom in Richtung auf das Führungsgeländer 14 des Abförderers 13 unter dem Einfluß einer Kraft einwirkendes Gegengeländer 30 vorgesehen. Es ist mit dem einen Ende an der hochliegenden Längsseite des Zwischenförderers 10 mittels Gelenk 31 od. dgl. schwenkbar, am Gestell 17 befestigt und mit dem entgegengesetzten freien Ende unter Verringerung von dessen Zwischenabstand zum Führungsgeländer 14 an oder in den Transportweg des einspurigen Flaschenstroms des Abförderers 13 geführt. Das Gegengeländer 30, das aus elastischem Kunststoffmaterial, z. B. Polyäthylen besteht, weist beispielsweise einen rechteckigen Querschnitt von 75 mm × 5 mm auf. Die auf das Gegengeländer 30 wirkende Kraft wird durch ein oder mehrere Gewichte 33 ausgeübt, die in einem am freien Ende des Gegengeländers 30 befestigten Schuh 32, der vorzugsweise aus Kunststoffmaterial besteht, gelagert sind. Der Schuh 32 gleitet auf der gemeinsamen Transportfläche von Zwischenförderer 10 und Abförderer 13 und stützt dabei das Gegengeländer 30 ab. Eine solche Geländerausbildung mit einem Schuh 32 ist z. B. ausreichend bei Verwendung der die Schräge 29 aufweisenden Gleitbleche 26. Je nach Erfordernis können auch zwei oder mehrere Schuhe 32 mit gegenseitigem Abstand am Gegengeländer 30 vorgesehen sein, um an mehreren Stellen des Gegengeländers 30 zusätzliche Kräfte wirksam werden zu lassen. Dies ist beispielsweise erforderlich bei einem niveaugleichen Übergang mit Gleitblechen 26, die an der Überschubseite nach Art der Doppelzunge 28 ausgebildet sind und bei deren Verwendung es vorkommt, daß mehrere Flaschen gleichzeitig vom Gegengeländer 30 in den sich bildenden einspurigen Flaschenstrom eingereiht werden müssen (Fig. 6). Das jeweilige auswechselbare Gewicht 33 ist vorzugsweise als Rundkörper ausgebildet, für dessen Aufnahme der Schuh 32 mit einer passenden Bohrung 34 versehen ist (Fig. 7).

Die nicht näher dargestellten Antriebseinrichtungen für die Transportbänder 11, 12; 16, 22-24 des Zwischenförderers 10, Abförderers 16 und Zuförderers 19 sind in der allgemeinen Ausbildung der Anordnung einstellbar ausgebildet, so daß sowohl die Geschwindigkeit der Transportbänder 16, 22-24 von Zuförderer 19 und Abförderer 13 an die von der jeweiligen Flaschenbehandlungsmaschine abzunehmende Flaschenmenge anpaßbar als auch die Geschwindigkeit der Transportbänder 11, 12 des Zwischenförderers 10 gleich oder untereinander den jeweiligen Anforderungen entsprechend abgestuft einstellbar sind, damit z. B. die vom Zuförderer 19 mit geringer Zuführgeschwindigkeit angeförderten Flaschen schonend auf die gegenüber der Zuführgeschwindigkeit wesentlich höhere Abführgeschwindigkeit des Abförderers 13 beschleunigt werden. Besonders schonend erfolgt das Umformen, wenn die Umlaufgeschwindigkeiten der Transportbänder 11 und 12 des Zwischenförderers und das Transportband des Abförderers 13 mit gleicher Geschwindigkeit umlaufen.

Wird nach entsprechender Einstellung der Bandgeschwindigkeiten von Zwischenförderer 10, Abförderer 16 und Zuförderer 19 auf letzterem ein breiter Flaschenstrom angefördert, dann werden beim Ausführungsbeispiel in Ausführungsform nach Fig. 1 und 3 die fortlaufend antransportierten Flaschen in der in Fig. 8 dargestellten Art und Weise über den niveaugleichen Übergang 25 auf die Transportbänder 11, 12, 16 von Abförderer 13 und Zwischenförderer 10 übergeschoben. Die dabei auf das Transportband 16 des Abförderers 13 gelangenden Flaschen werden durch die Einwirkung des Transportbandes 16 beschleunigt und auf Abstand gebracht oder aber auch nur einfach abgefordert. In die dabei zwischen den Flaschen sich bildenden Lücken reihen sich die auf den Zwischenförderer 10 übergeschobenen Flaschen ein, und zwar im wesentlichen unter der Einwirkung des Hangabtriebs oder aber auch unter der zusätzlichen Einwirkung der in der Geschwindigkeit untereinander abgestuften Transportbänder 11, 12 des Zwischenförderers 10. Dadurch bildet sich bereits nach kurzer Transportstrecke am Führungsgeländer 14 ein einspuriger Flaschenstrom, der auf dem Transportband 16 abgefördert wird. Falls bei der vorbeschriebenen Bildung des einspurigen Flaschenstroms nicht vollständig in den Flaschenstrom eingereihte Flaschen in den Bereich des Abförderers 13 gelangen, der beiderseits mit den Führungsgeländern 14, 15 versehen ist und dort Störungen verursachen, kann das in Fig. 6 dargestellte Gegengeländer 30 vorgesehen werden. Es wirkt unter Einfluß der Gewichte 33 auf den sich bildenden einspurigen Flaschenstrom ein und reiht diese Flaschen in den einspurigen Flaschenstrom ein.

Bei der Ausführungsform nach Fig.. 1 und 4 wird der einspurige Flaschenstrom in der in Fig. 5 dargestellten Art und Weise aus nacheinander über den niveaugleichen Übergang 25 übergeschobenen kurzen Einzelreihen gebildet, die im Beispielsfall jeweils aus vier ohne gegenseitigen Abstand zueinanderstehenden Flaschen bestehen. Diese Einzelreihen entstehen selbständig im antransportierten breiten Flaschenstrom auf dem Zuförderer 19 jeweils in einer Schräglage von 60° zur Transportrichtung bei Einstellung des Führungsgeländers 21 zum Führungsgeländer 20 auf einen Zwischenabstand, der vier mit Flaschen dicht gepackten Längsreihen in Förderrichtung entspricht. Beim Überschub der Einzelreihen in dieser Anordnung über den Übergang 25 erfahren die jeweils die Schrägen 29 der Gleitbleche 26 passierenden Flaschen einer Einzelreihe bei einer Geschwindigkeitsabstufung der Transportbänder 11, 12, 16 des Zwischenförderers 10 und des Abförderers 13 eine unterschiedliche Beschleunigung unter gleichzeitiger Einwirkung des Hangabtriebs. Dadurch nehmen die Flaschen der Einzelreihe gegenseitigen Abstand ein, wobei sich der bereits vom Überschub her auf dem Transportband 16 des Abförderers 13 stehenden unteren Flasche die in Richtung auf das Führungsgeländer 14 gleitenden übrigen drei Flaschen in Reihe anschließen. Bei Anlage der letzten Flasche dieser Einzelreihe am Führungsgeländer 14 formiert sich die nachfolgende Einzelreihe in der vorbeschriebenen Weise, so daß fortwährend Einzelreihen unter geringster Lärmentwicklung auf den Abförderer 13 gelangen und als einspurige Flaschenreihe der nachgeordneten Flaschenbehandlungsmaschine zugeführt werden.

Auch bei dieser Ausführungsform kann das in Fig. 5 dargestellte Gegengeländer 30 eingesetzt werden, das wie vorbeschrieben ausgebildet und angeordnet ist und in gleicher Art und Weise auf den sich bildenden Flaschenstrom einwirkt und diesem die nicht eingereihten Flaschen zuführt.

Wie sich aus der vorstehenden Beschreibung ergibt, ist allen Ausführungsformen gemeinsam, daß die Obertrume der Förderbänder von Zwischen- und Abförderer den eingangs genannten, zu den Obertrumen der Förderbänder des Zuförderers etwa niveaugleichen Umformbereich bilden.

## Patentansprüche

1. Anordnung zum Umformen eines angeförderten mehrspurigen Flaschenstromes zu einem abzufördernden einspurigen Flaschenstrom mit einem zwischen einem Führungsgeländer (20, 21) aufweisenden Zuförderer (19) und einem Führungsgeländer (14) aufweisenden Abförderer (13) angeordneten Zwischenförderer (10), dessen Transportbänder (11, 12) mit ihren Obertrumen einen Umformbereich bilden, in dem sie zumindest teilweise bündig nebeneinanderliegend nach Art einer schiefen Ebene quer zur Förderrichtung vom Obertrum des Zuförderers (19) zum Obertrum des Abförderers (13) geneigt angeordnet sind, wobei die der tiefliegenden Seite der schiefen Ebene zugewandten Führungsgeländer (20, 14) von Zu- (19) und Abförderer (13) über den Umformbereich hinweg miteinander verbunden sind, dadurch gekennzeichnet, daß das Obertrum des Transportbandes (16) des Abförderers (13) und die Obertrume der Transportbänder (11, 12) des Zwischenförderers (10) den Umformbereich bilden, dessen Spurbreite der Spurbreite des Zuförderers (19) entspricht und diesem in Förderrichtung im wesentlichen niveau- und spurgleich nachgeordnet ist, und daß die Führungsgeländer (20, 14) geradlinig miteinander verbunden sind.

2. Anordnung nach Anspruch 1, dadurch gekennzeichnet, daß die Umlenkung des Abförderers (13) vom Untertrum zum Obertrum im Bereich der Umlenkung des Zwischenförderers (10) vom Untertrum zum Obertrum angeordnet ist, so daß die an den Zwischenförderer (10) angrenzende Förderfläche des Abförderers (13) mit den Obertrumen des Zwischenförderers (10) den gemeinsamen Umformbereich bildet, daß der Zuförderer (19) in Transportrichtung des Zwischenförderers (10) mit der Umlenkung vom Obertrum zum Untertrum der Umlenkung des Zwischenförders (10) und des Abförderers (13) vom Untertrum zum Obertrum vorgeordnet und an die Neigung der gemeinsamen Transportfläche derart angepaßt ist, daß die tiefliegende Längsseite des Zuförderers (19) und des Abförderers (13) in Flucht zueinander stehen und daß im Übergangsbereich der Obertrume des Zuförderers (19) zum gemeinsamen Umformbereich ein im wesentlichen niveaugleicher Übergang (25) zugeordnet ist.

3. Anordnung nach dem Anspruch 2, dadurch gekennzeichnet, daß der niveaugleiche Übergang (25) aus mehreren Gleitblechen (26) besteht und je ein Gleitblech (26) oberhalb jeder Umlenkung des Zuförderers (19) vom Obertrum zum Untertrum und oberhalb jeder Umlenkung des Zwischenförderers (10) sowie oberhalb der Umlenkung des Abförderers (13) jeweils vom Untertrum zum Obertrum angeordnet ist.

4. Anordnung nach Anspruch 3, dadurch gekennzeichnet, daß die zum zugeordneten Transportband (11, 12, 16) gerichtete Überschubkante (27) des jeweils oberhalb einer jeden Umlenkung des Zwischenförderers (10) und des Abförderers (13) vom Untertrum zum Obertrum angeordneten Gleitblechs (26) in der Art einer Doppelzunge (28) ausgebildet ist.

5. Anordnung nach Anspruch 3, dadurch gekennzeichnet, daß die zum zugeordneten Transportband (11, 12, 16) gerichtete Überschubkante (27) des jeweils oberhalb einer jeden Umlenkung des Zwischenförderers (10) und des Abförderers (13) vom Untertrum zum Obertrum angeordneten Gleitblechs (26) als Schräge (29) ausgebildet ist, die quer zur Transportrichtung des Transportbandes (11, 12, 16) verläuft und mit der in Transportrichtung des Transportbandes verlaufenden tiefliegenden oder hochliegenden Längsseite des Gleitbleches (26) einen Winkel von 60° bis 65°, vorzugsweise von 65° einschließt, wobei die Schrägen (29) der Gleitbleche (26) eine gemeinsame Gerade bilden.

6. Anordnung nach einem der Ansprüche 1 bis 5, dadurch gekennzeichnet, daß stromabwärts des höhengleichen Übergangs (25) und gegenüberliegend dem Führungsgeländer (14) des Abförderers (13) ein unter dem Einfluß einer Kraft stehendes Gegengeländer (30) aus elastischem Kunststoff vorgesehen ist, das mit dem einen Ende unter Zwischenschaltung eines Gelenks (31) an der hochgelegenen Längsseite des Gestells (17) des Zwischenförderers (19) schwenkbar befestigt ist und mit dem entgegengesetzten freien Ende unter Verringerung des Zwischenabstandes zum Führungsgeländer (14) des Abförderers (13) an oder in den Transportweg des einspurigen Flaschenstromes des Abförderers (13) geführt ist.

7. Anordnung nach Anspruch 6, dadurch gekennzeichnet, daß die das Gegengeländer (30) beeinflussende Kraft ein Gewicht (33) ist, das am Gegengeländer (30) im Bereich seines freien Endes mittels eines Zwischengliedes angeordnet ist.

8. Anordnung nach Anspruch 7, dadurch gekennzeichnet, daß das Zwischenglied aus einem auf der gemeinsamen Transportfläche gleitenden Schuh (32) besteht, der mit dem Gegengeländer (30) im Bereich seines freien Endes verbunden und mit einer Bohrung (34) zur Aufnahme des Gewichtes (33) versehen ist.

9. Anordnung nach dem Anspruch 8, dadurch gekennzeichnet, daß das Gegengeländer (30) im Bereich seines freien Endes mit zwei Gewichten (33) versehen und für jedes Gewicht im Schuh (32) eine Bohrung (34) vorgesehen ist.

10. Anordnung nach einem der Ansprüche 7 bis 9, dadurch gekennzeichnet, daß am Gegengeländer (30) oberhalb des bzw. der Gewichte (33) zusätzlich ein oder mehrere in gegenseitigem Abstand zueinander stehende Gewichte mit je einem Zwischenglied angeordnet sind.

11. Anordnung nach Anspruch 6, dadurch gekennzeichnet, daß das Gelenk (31) des Gegengeländers (30) im Bereiche des seitlichen Führungsgeländers (21) angeordnet ist.

12. Anordnung nach einem der Ansprüche 1 bis 11, dadurch gekennzeichnet, daß die Transportbänder (11, 12) des Zwischenförderers (10) mit gleicher Geschwindigkeit umlaufen.

13. Anordnung nach einem der Ansprüche 1 bis 11, dadurch gekennzeichnet, daß die Transportbänder (11, 12 ; 16) von Zwischenförderer (10) und Abförderer (13) mit gleicher Geschwindigkeit umlaufen.

14. Anordnung nach einem der Ansprüche 1 bis 11, dadurch gekennzeichnet, daß die Transportbänder (11, 12) des Zwischenförderers (10) mit abgestufter Geschwindigkeit umlaufen.

15. Anordnung nach Anspruch 1 oder 2, dadurch gekennzeichnet, daß die Transportbänder (11, 12) des Zwischenförderers (10) zu einem Transportband zusammengefaßt sind, dessen Breite der um die Breite des Transportbandes (16) des Abförderers (13) verringerten Breite des Zuförderers (19) entspricht.

## Claims

1. Arrangement for the transforming of a supplied multi-track bottle stream into a single-track bottle stream to be conveyed away, with an intermediate conveyor (10), which is arranged between a feed conveyor (19) displaying guide rails (20, 21) and a removal conveyor (13) displaying guide rails (14) and the transport belts (11, 12) of which by their upper runs form a transformation region, in which they are arranged to be lying at least partially flush one beside the other in the manner of a skew plane inclined transversely to the conveying direction from the upper run of the feed conveyor (19) to the upper run of the removal conveyor (13), wherein those guide rails (20, 14) of feed conveyor (19) and removal conveyor (13), which face the lower side of the skew plane, are connected together over and beyond the transformation region, characterised thereby, that the upper run of the transport belt (16) of the removal conveyor (13) and the upper runs of the transport belts (11, 12) of the intermediate conveyor (10) form the transformation region, the track width of which corresponds to the track width of the feed conveyor (19) and is arranged behind this in conveying direction substantially equal in level and track, and that the guide rails (20, 14) are connected together rectilinearly.

2. Arrangement according to claim 1, characterised thereby, that the deflection of the removal conveyor (13) from the lower run to the upper run is arranged in the region of the deflection of the intermediate conveyor (10) from the lower run to the upper run so that that conveying surface of the removal conveyor (13), which adjoins the intermediate conveyor (10), together with the upper run of the intermediate conveyor (10) forms the common transformation region, that the feed conveyor (19) is arranged in transport direction of the intermediate conveyor (1) with the deflection from the upper run to the lower run ahead of the deflection of the intermediate conveyor (10) and of the removal conveyor (13) from the lower run to the upper run and matched to the inclination of the common transport surface, that the lower longitudinal side of the feed conveyor (19) and of the removal conveyor (13) stand in mutual alignment and that a transition (25) of substantially equal level is associated with the common transformation region in the transition region of the upper runs of the feed conveyor (19).

3. Arrangement according to the claim 2, characterised thereby, that the transition (25) at equal level consists of several metal slide plates (26) and a respective metal slide plate (26) is arranged above each deflection of the feed conveyor (19) from the upper run to the lower run and above each deflection of the intermediate conveyor (10) as well as above the deflection of the removal conveyor (13) each time from the lower run to the upper run.

4. Arrangement according to claim 3, characterised thereby, that the transfer edge (27), which is directed towards the associated transport belt (11, 12, 16), of the metal slide plate (26), which is arranged respectively above each deflection of the intermediate conveyor (10) and of the removal conveyor (13) from the lower run to the upper run, is constructed in the manner of a double tongue.

5. Arrangement according to claim 3, characterised thereby, that the transfer edge (27), which is directed towards the associated transport belt (11, 12, 16), of the metal slide plate (26), which is arranged respectively above each deflection of the intermediate conveyor (10) and of the removal conveyor (13) from the lower run to the upper run, is constructed as an incline which extends transversely to the transport direction of the transport belt (11, 12, 16) and includes an angle of 60° to 65°, preferably of 65° with the lower or higher longitudinal side of the metal slide plate (26) extending in the transport direction of the transport belt, wherein the inclines (29) of the metal slide plates (26) form a common straight line.

6. Arrangement according to one of the claims 1 to 5, characterised thereby, that a counterrail (30), of elastic synthetic material and standing under the influence of a force, is provided downstream of the transition (25) of equal level and lying opposite the guide rail (14) of the removal conveyor (13), is pivotably fastened by the one end with the interposition of a hinge (31) at the higher longitudinal side of the frame (17) of the intermediate conveyor (19) and guided by the opposite free end, while reducing the intermediate spacing from the guide rail (14) of the removal conveyor (13), at or in the transport path of the single-track bottle stream of the removal conveyor (13).

7. Arrangement according to claim 6, characterised thereby, that the force influencing the counterrail (30) is a weight (33), which is arranged by means of an intermediate member at the counterrail (30) in the region of its free end.

8. Arrangement according to claim 7, characterised thereby, that the intermediate member consists of a shoe (32), which slides on the common transport surface, is connected with the counterrail (30) in the region of its free end and which is provided with a bore (34) for the reception of the weight (33).

9. Arrangement according to claim 8, characterised thereby, that the counterrail (30) is provided with two weights (33) in the region of its free end and a bore (34) for each weight is provided in the shoe (32).

10. Arrangement according to one of the claims 7 to 9, characterised thereby, that one or more weights, standing at a mutual spacing one from the other and each with a respective intermediate member, are additionally arranged at the counterrail (30) above the weight or weights (33).

11. Arrangement according to claim 6, characterised thereby, that the hinge (31) of the counterrail (30) is arranged in the region of the lateral guide rail (21).

12. Arrangement according to one of the claims 1 to 11, characterised thereby, that the transport belts (11, 12) of the intermediate conveyor (10) circulate at equal speed.

13. Arrangement according to one of the claims 1 to 11, characterised thereby, that the transport belts (11, 12 ; 16) of the intermediate conveyor (10) and the removal conveyor (13) circulate at equal speed.

14. Arrangement according to one of the claims 1 to 11, characterised thereby, that the transport belts (11, 12) of the intermediate conveyor (10) circulate at stepped speed.

15. Arrangement according to claim 1 or 2, characterised thereby, that the transport belts (11, 12) of the intermediate conveyor (10) are combined into one transport belt, the width of which corresponds to the width of the feed conveyor (19) reduced by the width of the transport belt (16) of the removal conveyor (13).

## Revendications

1. Dispositif pour transformer un flot défilant de bouteilles délivré sur plusieurs rangs, en un flot défilant de bouteilles à évacuer sur un seul rang, présentant un convoyeur intermédiaire (10) intercalé entre un convoyeur d'amenée (19) muni de rambardes de guidage (20, 21) et un convoyeur d'évacuation (13) doté de rambardes de guidage (14), les bandes transporteuses (11, 12) dudit convoyeur intermédiaire formant, par leurs brins supérieurs, une zone de transformation dans laquelle elles sont juxtaposées en venant au moins partiellement à fleur et en étant agencées à l'oblique à la manière d'un plan incliné, transversalement à la direction d'acheminement du brin supérieur du convoyeur d'amenée (19) au brin supérieur du convoyeur d'évacuation (13), les rambardes de guidage (20, 14) des convoyeurs d'amenée (19) et d'évacuation (13), tournées vers le côté encaissé du plan incliné, étant reliées mutuellement au-dessus et à l'écart de la zone de transformation, dispositif caractérisé par le fait que le brin supérieur de la bande transporteuse (16) du convoyeur d'évacuation (13) et les brins supérieurs des bandes transporteuses (11, 12) du convoyeur intermédiaire (10) forment la zone de transformation dont la largeur de piste correspond à la largeur de piste du convoyeur d'amenée (19), et est disposée en aval de ce dernier dans la direction de l'acheminement, sensiblement avec égalité de niveau et de piste ; et par le fait que les rambardes de guidage (20, 14) sont reliées l'une à l'autre rectilignement.

2. Dispositif selon la revendication 1, caractérisé par le fait que la zone de renvoi du brin inférieur au brin supérieur du convoyeur d'évacuation (13) se trouve au voisinage de la zone de renvoi du brin inférieur au brin supérieur du convoyeur intermédiaire (10), de telle sorte que la surface d'acheminement du convoyeur d'évacuation (13) attenante au convoyeur intermédiaire (10) forme la zone commune de transformation avec les brins supérieurs de ce convoyeur intermédiaire (10) ; par le fait que, dans la direction d'acheminement du convoyeur intermédiaire (10), la zone de renvoi du brin supérieur au brin inférieur du convoyeur d'amenée (19) est disposée en amont de la zone de renvoi des brins inférieurs aux brins supérieurs du convoyeur intermédiaire (10) et du convoyeur d'évacuation (13), et est adaptée à l'inclinaison de la surface d'acheminement commune de telle sorte que les côtés longitudinaux encaissés du convoyeur d'amenée (19) et du convoyeur d'évacuation (13) viennent mutuellement à fleur ; et par le fait qu'une transition (25) sensiblement de même niveau est associée à la zone de passage des brins supérieurs du convoyeur d'amenée (19) à la zone commune de transformation.

3. Dispositif selon la revendication 2, caractérisé par le fait que la transition (25) de même niveau se compose de plusieurs tôles (26) de glissement, une tôle (26) de glissement respective étant disposée au-dessus de chaque zone de renvoi du brin supérieur au brin inférieur du convoyeur d'amenée (19) et au-dessus de chaque zone de renvoi respective entre le brin inférieur et le brin supérieur du convoyeur d'évacuation (13).

4. Dispositif selon la revendication 3, caractérisé par le fait que le bord de transfert (27), dirigé vers la bande transporteuse associée (11, 12, 16), de la tôle de glissement (26) respectivement disposée au-dessus de chacune des zones de renvoi entre les brins inférieurs et les brins supérieurs du convoyeur intermédiaire (10) et du convoyeur d'évacuation (13), est réalisé à la manière d'une languette double (28).

5. Dispositif selon la revendication 3, caractérisé par le fait que le bord de transfert (27), dirigé vers la bande transporteuse associée (11, 12, 16), de la tôle (26) de glissement respectivement disposée au-dessus de chacune des zones de renvoi des brins inférieurs aux brins supérieurs du convoyeur intermédiaire (10) et du convoyeur d'évacuation (13), est réalisé en tant que rampe (29), laquelle s'étend transversalement à la direction d'acheminement de la bande transporteuse (11, 12, 16) et forme un angle de 60° à 65°, de préférence de 65° avec le côté longitudinal encaissé ou rehaussé de la tôle (26) de glissement s'étendant dans la direction d'acheminement de la bande transporteuse, les rampes (29) des tôles (26) de glissement formant une ligne droite commune.

6. Dispositif selon l'une des revendications 1 à 5, caractérisé par le fait qu'il est prévu, en aval de la transition (25) de même hauteur et en vis-à-vis de la rambarde de guidage (14) du convoyeur d'évacuation (13), une rambarde complémentaire (30) en une matière plastique élastique, qui est soumise à l'influence d'une force ; qui est fixée avec faculté de pivotement par l'une de ses extrémités, avec interposition d'une articulation (31), au côté longitudinal rehaussé du bâti (17) du convoyeur intermédiaire (19) ; et qui est guidée par son extrémité libre opposée, avec réduction de l'espacement intermédiaire vis-à-vis de la rambarde de guidage (14) du convoyeur d'évacuation (13), sur ou dans le trajet d'acheminement du flot de bouteilles à un seul rang par le convoyeur d'évacuation (13).

7. Dispositif selon la revendication 6, caractérisé par le fait que la force influençant la rambarde complémentaire (30) est un poids (33) installé sur la rambarde complémentaire (30), au voisinage de son extrémité libre, au moyen d'un organe intermédiaire.

8. Dispositif selon la revendication 7, caractérisé par le fait que l'organe intermédiaire consiste en un sabot (32) qui coulisse sur la surface d'acheminement commune, est relié à la rambarde complémentaire (30) au voisinage de son extrémité libre, et est muni d'un perçage (34) en vue de recevoir le poids (33).

9. Dispositif selon la revendication 8, caractérisé par le fait que la rambarde complémentaire (30) est pourvue de deux poids (33) au voisinage de son extrémité libre, un perçage (34) étant prévu dans le sabot (32) pour chaque poids.

10. Dispositif selon l'une des revendications 7 à 9, caractérisé par le fait qu'un ou plusieurs poids espacés d'une distance mutuelle sont installés en plus sur la rambarde complémentaire (30) à l'aide d'un organe intermédiaire respectif, au-dessus du ou des poids (33), respectivement.

11. Dispositif selon la revendication 6, caractérisé par le fait que l'articulation (31) de la rambarde complémentaire (30) se trouve au voisinage de la rambarde latérale de guidage (21).

12. Dispositif selon l'une des revendications 1 à 11, caractérisé par le fait que les bandes transporteuses (11, 12) du convoyeur intermédiaire (10) tournent à la même vitesse.

13. Dispositif selon l'une des revendications 1 à 11, caractérisé par le fait que les bandes transporteuses (11, 12 ; 16) du convoyeur intermédiaire (10) et du convoyeur d'évacuation (13) tournent à la même vitesse.

14. Dispositif selon l'une des revendications 1 à 11, caractérisé par le fait que les bandes transporteuses (11, 12) du convoyeur intermédiaire (10) tournent à une vitesse échelonnée.

15. Dispositif selon la revendication 1 ou 2, caractérisée par le fait que les bandes transporteuses (11, 12) du convoyeur intermédiaire (10) sont rassemblées en une bande transporteuse dont la largeur correspond à la largeur du convoyeur d'amenée (19), diminuée de la largeur de la bande transporteuse (16) du convoyeur d'évacuation (13).

Fig. 2

Fig. 1

Fig. 7

0 175 292

Fig. 5

Fig. 4

Fig. 3

2

0 175 292

Fig. 8

Fig. 6

3